**Europäisches Patentamt**

**European Patent Office**

**Office européen des brevets**

(19)

(11) Veröffentlichungsnummer: **0 264 451 B1**

(12) **EUROPÄISCHE PATENTSCHRIFT**

(45) Veröffentlichungstag der Patentschrift:
28.08.91 Patentblatt 91/35

(51) Int. Cl.$^5$: **B23K 7/06**

(21) Anmeldenummer: **86904468.5**

(22) Anmeldetag: **30.04.86**

(86) Internationale Anmeldenummer:
**PCT/SU86/00040**

(87) Internationale Veröffentlichungsnummer:
**WO 87/06513 05.11.87 Gazette 87/24**

(54) THERMOIMPULSANLAGE ZUM ENTGRATEN VON WERSTÜCKEN.

(43) Veröffentlichungstag der Anmeldung:
27.04.88 Patentblatt 88/17

(45) Bekanntmachung des Hinweises auf die Patenterteilung:
28.08.91 Patentblatt 91/35

(84) Benannte Vertragsstaaten:
DE FR GB IT SE

(56) Entgegenhaltungen:
DE-A- 3 204 995
GB-A- 1 353 031
US-A- 1 362 535
US-A- 4 394 007
SOVIET INVENTIONS ILLUSTRATED, Sektion M, Woche D40, 11. November 1981, Derwent Publications Ltd, GB; & SU-A-795 823 (KHARK AVIAT INST) 25-01-1981
SOVIET INVENTIONS ILLUSTRATED, Sektion M, Woche K45, 21. Dezember 1983, Derwent Publications Ltd, GB; & SU-A-988 499 (BOZH-KO VP) 15-01-1983

(73) Patentinhaber: KHARKOVSKY AVIATSIONNY INST. IMENI N.E. ZHUKOVSKOGO
ul. Chkalova, 17
Kharkov, 310191 (SU)

(72) Erfinder: BOZHKO, Valery Pavlovich
ul. Chkalova, 13-56
Kharkov, 310084 (SU)
Erfinder: LOSEV, Alexei Vasilievich
Saltovskoe shosse, 240a-11
Kharkov, 310171 (SU)
Erfinder: TAKORIANTS, Mateos Petrovich
pr. Lenina, 64-41
Kharkov, 310164 (SU)
Erfinder: PLESHKOV, Viktor Ivanovich
ul. Gvardeitsev Shironintsev, 26-204
Kharkov, 310120 (SU)
Erfinder: STRIZHENKO, Vitaly Evgenievich
ul. Osnovyanskaya, 56
Kharkov, 310010 (SU)
Erfinder: LEVITYANSKY, Ivan Anisimovich
ul. Volodarskogo, 34-73 Leningradskaya obl.
Gatchina, 188350 (SU)
Erfinder: FILIPPOV, Boris Leonidovich
ul. 23 Avgusta, 59-105
Kharkov, 310103 (SU)
Erfinder: KONONENKO,Vadim Grigorievich
(deceased) (SU)

(74) Vertreter: Finck, Dieter et al
Patentanwälte v. Füner, Ebbinghaus, Finck
Mariahilfplatz 2 & 3
W-8000 München 90 (DE)

## Beschreibung

Gebiet der Technik

Die vorliegende Erfindung bezieht sich auf Anlagen zum Entgraten von Werkstücken und betrifft eine Thermoimupulsanlage zum Entgraten von Werkstücken.

Zugrundeliegender Stand der Technik

Es ist eine Thermoimpulsanlage zum Entgraten von Werkstücken bekannt, die einen C-förmigen Rahmen mit einer Arbeitskammer und einen Tisch mit Böden zur Aufnahme der Werkstücke enthält, der mit Hilfe eines Arbeitszylinders bewegt wird (siehe z.B. US-Patentschrift Nr.3666252, Klasse 266/2 R, bekanntgemacht am 30.Mai 1972).

In dieser Anlage kommt es auf Grund ihrer oben beschriebenen konstruktiven Ausführung zum Überhitzen der zu behandelnden Werkstücke durch die überschüssige Wärme der Verbrennungsprodukte, da die Verbrennungsprodukte nicht schnell genug aus der Kammer entweichen können, der Bearbeitungszyklus der Werkstücke verlängert sich um 5 bis 20 sec. und auf den behandelten Werkstücken entsteht ein erheblicher Belag aus Teilchen der Verbrennungsprodukte. Außerdem ist der Bearbeitungsprozeß in dieser Anlage mit einer großen Lärmentwicklung und Umweltverschmutzung verbunden, da die Verbrennungsprodukte nicht gereinigt werden.

Teilweise sind die oben genannten Nachteile in einer bekannten Thermoimpulsanlage zum Entgraten von Werkstücken beseitigt worden, die einen Rahmen mit einer Arbeitskammer enthält, die mit Zündkerzen, einem Einlaßventil zum Füllen des Raums der Kammer mit einem Brennstoffgemisch, einem Auslaßventil zum Austritt der Verbrennungsprodukte aus dem Raum der Kammer und einem Deckel zur Aufnahme der zu behandelnden Werkstücke versehen ist, der eine hin- und hergehende Bewegung im Innern der Kammer ausführen kann (siehe z.B. SU-Urheberscheinschrift Nr.988499, Klasse B 23 K 28/00, B 23 K 7/06, bekanntgemacht am 25. Januar 1983).

In dieser Anlage befindet sich das Auslaßventil auf dem Deckel der Arbeitskammer und ist der direkten Einwirkung der beim Abbrennen des Brennstoffgemisches entstehenden heißen Verbrennungsprodukte ausgesetzt. Beim Durchlassen der Verbrennungsprodukte wirkt auf das Auslaßventil ein Gasstrom ein, der Teilchen von Metalloxiden und von verbranntem Werkstoff der Grate enthält. Unter diesen Bedingungen ist das Ventil ungenügend widerstandsfähig gegenüber der ständig sich wiederholenden Einwirkung der erwahnten Faktoren und muß häufig ausgewechselt werden.

Außerdem verringert der durch die Einwirkung der genannten Faktoren bewirkte Verlust der Dichtigkeit des Ventils die Zuverlässigkeit und Betriebssicherheit der gesamten Vorrichtung durch das mögliche Ausströmen des Brennstoffgemisches.

Zur Verringerung des beim Auspuff der Verbrennungsprodukte aus dem Auslaßventil der oben beschriebenen Anlage erzeugten Lärms müssen spezielle Vorrichtungen installiert werden.

Offenbarung der Erfindung

Der vorliegenden Erfindung liegt die Aufgabe zugrunde, eine Thermoimpulsanlage zum Entgraten von Werkstücken zu schaffen, in der der Rahmen mit der Arbeitskammer und das Auslaßventil so ausgeführt sind, daß die Zuverlässigkeit und Betriebssicherheit der gesamten Anlage und die Lebensdauer des Auslaßventils erhöht und erheblich der Lärmpegel beim Austritt der Verbrennungsprodukte aus dem Raum der Kammer gesenkt wird bei gleichzeitiger Reinigung der Verbrennungsprodukte von Metalloxiden und Werkstoffteilchen der entfernten Grate.

Das wird dadurch erreicht, daß in einer Thermoimpulsanlage zum Entgraten von Werkstücken, die einen Rahmen mit einer Arbeitskammer enthält, die mit Zündkerzen, einem Einlaßventil zum Füllen des Raums der Kammer mit einem Brennstoffgemisch, einem Auslaßventil zum Austritt der Verbrennungsprodukte aus dem Raum der Kammer und einem Deckel zur Aufnahme der zu behandelnden Werkstücke versehen ist, der eine hin und hergehende Bewegung im Innern der Kammer ausführen kann, gemäß der Erfindung der Rahmen in Form eines hohlen Gehäuses ausgebildet ist, die Arbeitskammer im Innern dieses Gehäuses mit Bildung eines Raums zischen den Innenwänden des Gehäuses und den Außenwänden der Kammer für eine teilweise diesen Raum füllende Flüssigkeit untergebracht ist, das Auslaßventil im unterem Teil der Arbeitskammer an deren Längsachse enthang unter einer Flüssigkeitsschicht montiert ist und in seinen Seitenwänden Öffnungen ausgeführt sind, die den Raum für die Flüssigkeit mit dem Raum der Arbeitskammer verbinden, und im Deckel zur Aufnahme der zu behandelnden Werkstücke auf der Seite des Auslaßventils Öffnungen für den Durchgang der Verbrennungsprodukte aus dem Raum der Arbeitskammer durch die Eintrittsöffnung des Auslaßventils und seine in den Seitenwänden gebildeten Öffnungen in den Raum für die Flüssigkeit ausgeführt sind.

Eine solche konstruktive Ausführung der erfindungsgemäßen Anlage ermöglicht eine Erhöhung der Zuverlässigkeit des Auslaßventils, eine Verringerung des beim Austritt der Verbrennungsprodukte aus dem Raum der Arbeitskammer nach dem Behandlungsprozeß entstehenden Lärms und eine Reinigung der erwähnten Verbrennungsprodukte von in ihnen enthaltenen Materialteilchen der verbrannten Grate und von Metalloxiden bei deren Durchgang durch die Flüssigkeit.

Kurze Beschreibung der Zeichnungen

Im folgenden wird die Erfindung durch die Beschreibung eines konkreten Ausführungsbeispiels und die beiliegenden Zeichnungen erläutert und zwar zeigt :
Fig. 1 eine erfindungsgemäße Thermoimpulsanlage zum Entgraten von Werkstücken in der Ausgangsstellung, in der das Eintragen (Austragen) der zu behandelnden Werkstücke vorgenommen wird (Längsschnitt) ;
Fig. 2 wie Fig. 1, in der Stellung, in der der Austritt der verbrennungsprodukte erfolgt ;
Fig. 3 eine Ansicht in Pfeilrichtung A in Fig. 1 ;
Fig. 4 wie Fig. 1 in der Stellung vor dem Zünden des Brennstoffgemisches.

Beste Ausführungsvariante der Erfindung

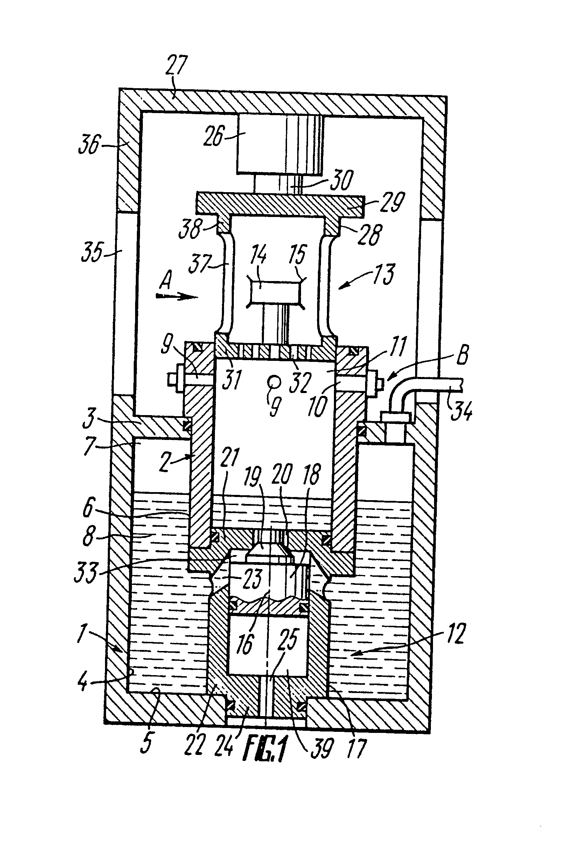

Die erfindungsgemäße Thermoimpulsanlage zum Entgraten von Werkstücken enthält einen Rahmen. Der Rahmen ist in Form eines hohlen Gehäuses 1 (Fig. 1) ausgegebildet. Im Innern dieses Gehäuses 1 befindet sich eine Kammer 2, die am Gehäuse 1 mit Hilfe von Riegeln 3 befestigt ist. Zwischen den Innenwänden 4 des Gehäuses 1 und seinem Boden 5, den Außenwänden 6 der Kammer 2 und den Riegeln 3 befindet sich ein Raum 7 für eine Flüssigkeit 8, die diesen teilweise füllt.

Das Gehäuse und die Kammer können eine beliebige, für den gegebenen Zweck geeig nete Form haben.

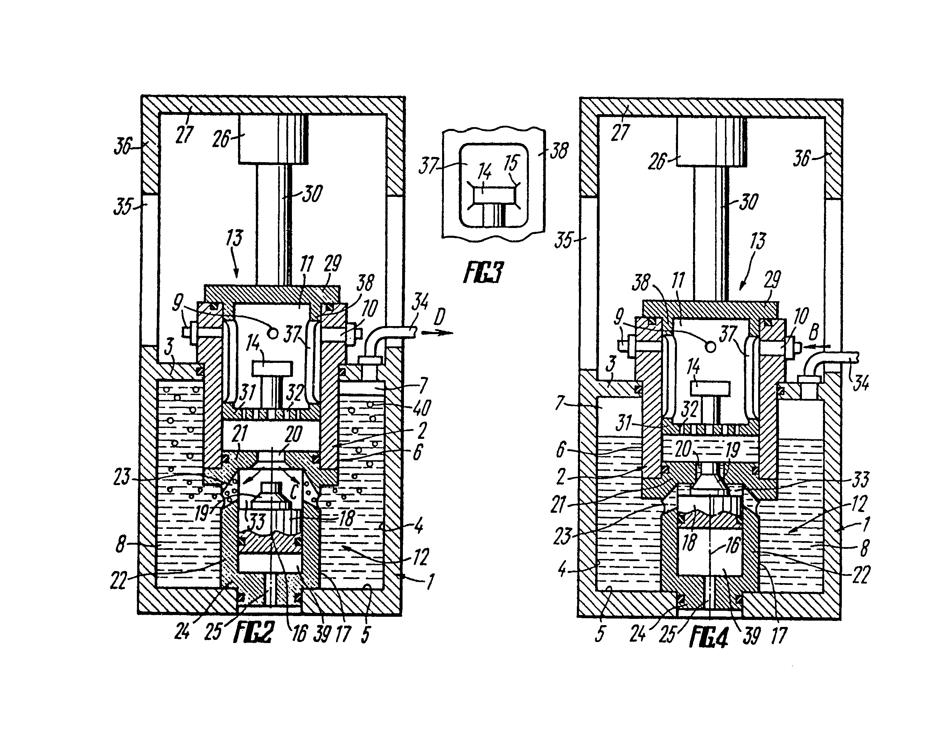

Die Arbeitskammer 2 hat Zündkerzen 9, ein Einlaßventil 10 zum Füllen des Raums 11 der Kammer 2 mit einem Brennstoffgemisch (in Richtung des Pfeils B), ein Auslaßventil 12 für den Austritt der Verbrennungsprodukte aus dem Raum 11 der kammer 2 (in Richtung des Pfeils C, siehe Fig. 2) und einen Deckel 13 (Fig. 1) zur Aufnahme des zu behandelnden Werkstücks 14, das mit Graten 15 behaftet ist, die entfernt werden sollen.

Die Zündkerzen 9 und das Ventil 10 sind in die Kammer 2 von seiten der außenwände 6 über den Riegel 3 einmontiert.

Das Auslaßventil 12 ist in den unteren Teil der Arbeitskammer 2 unter einer Schicht der Flüssigkeit 8 an der Längsachse 16 der Kammer 2 entlang einmontiert.

Das Auslaßventil 12 enthält ein hohles Gehäuse 17, in dem ein Schieber 18 mit einem Dichtungselement 19 untergebracht ist, das in die Eintrittsöffnung 20 des Ventils 12 hineingeht, die in einer der Stirnflächen 21 des Gehäuses 17 ausgeführt ist, und das den Boden der Kammer 2 bildet. In den Seitenwänden 22 des Gehäuses 17 befinden sich Öffnungen 23 zur Verbindung des Raums 7 für die Flüssigkeit 8 mit dem Raum 11 der Kammer 2. Für die Zuführung von Druckluft in das Gehäuse 17 des Ventils 12 hat die andere Stirnfläche 24 das Gehäuses 17 eine Offnung 25. Die Stirnfläche 24 des Gehäuses 17 ist in den Boden 5 des Gehäuses 1 einmontiert.

Der Deckel 13 kann im Innern der Kammer 2 mit Hilfe eines Hydraulikzylinders 26 eine hin- und hergehene Bewegung ausführen. Der Hydraulikzylinder 26 ist im oberen Teil 27 des Gehäuses 1 befestigt.

Der Deckel 13 ist in Form eines hohlen Gehäuses 28 ausgebildet. Die eine Stirnseite 29 des Gehäuses 28 ist an der Kolbenstange 30 des Hydraulikzylinders 26 befestigt, während die andere, auf seiten des Auslaßventils 12 gelegene Stirnfläche 31 Öffnungen 32 für den Durchgang der Verbrennungsprodukte aus dem Raum 11 der Kammer 2 durch die Eintrittsöffnung 20 des Ventils 12, durch einen über dem Schieber 18 gelegenen Raum 33 und durch die Offnungen 23 des Ventils 12 in die Flüssigkeit 8 und weiter in den Raum 7 und ein Rohr 34 hat, das in einen der Riegel 3 einmontiert und aus dem Gehäuse 1 durch eines der Fenster 35 herausgeführt wird, die in den Seitenwänden 36 des Gehäuses 1 ausgeführt und in erster Linie für das Aufstellen der zu behandelnden Werkstücke 14 auf dem Deckel 13 und zum Abnehmen der behandelten Werkstücke durch Fenster 37 (Fig. 3) vorgesehen sind, die in den Wänden 38 des Gehäuses 28 des Deckels 13 ausgefuhrt sind.

Das Auslaßventil und der Deckel können eine beliebige, für den gegebenen Zweck geeignete Form haben.

Das Funktionsprinzip der Thermoimpulsanlage zum Entgraten von Werkstücken besteht in folgendem.

Im der Ausgangslage (Fig. 1) befindet sich der Deckel 13 in seiner oberen Endstellung. In dieser Stellung wird das zu behandelnde, mit Graten 15 behaftete Werkstück 14 durch die Fenster 35 und 37 auf die Stirnfläche 31 des Gehäuses 28 des Deckels 13 gestellt. Der Schieber 18 des Auslaßventils 13 befindet sich in seiner oberen Endstellung und verschließt die Eintrittsöffnung 20 des Auslaßventils 12, indem es mit dem Dichtungselement 19 an die Stirnwand 21 des Gehäuses 17 des Ventils 12 anliegt. Dabei befindet sich über dem Ventil 12 eine Schicht der Flüssigkeit 8. Dann (siehe Fig. 4) setzt der Hydraulikzylinder 26 die Holbenstange 30 in Bewegung, und der Deckel 13 mit dem auf ihm befindlichen zu behandelnden Werkstück 14 nimmt seine untere Endstellung ein. Dabei kommt die Stirnwand 31 des Gehäuses 28 des Deckels 13 über der Flüssigkeit 8 zu liegen. Durch das Einlaßventil 10 in Pfeilrichtung B wird der Raum 11 der Kammer 2 mit einem Brennstoffgemisch gefüllt. Nachdem im Raum 11 der vorgebene Druck erreicht ist, wird mit Hilfe der Zündkerze 9 das Brennstoffgemisch gezündet.

Durch das schnelle Ansteigen des Drucks und der Temperatur im Raum 11 der Kammer 2 werden die am zu behandelnden Werkstück 14 befindlichen Grate 15 infolge ihrer entwickelten Oberfläche und relativ geringen Masse verbrannt und/oder abgeschmolzen.

Die auf eine hohe Temperatur erhitzten Verbrennungsprodukte mit den in ihnen enthaltenen Metalloxiden und Teilchen der verbrannten Grate müssen so schnell wie möglich aus dem Raum 11 der Kammer 2 entfernt werden, da die überschüssige Wärme der Verbrennungsprodukte eine Überhitzung des behandelten Werkstücks 14 verursachen kann und die erwähnten Teilchen und Oxide sich auf dem behandelten Werkstück 14 und auf den Innenwänden der Kammer 2 absetzen können, wodurch diese nachher zusätzlich gereinigt werden müssen.

Die oben beschriebene Entfernung der Verbrennungsprodukte geschieht mit Hilfe des Auslaßventils 12 (siehe Fig. 2).

Bei Unterbrechung der Druckluftzufuhr durch die Öffnung 25 in den Raum 39 unter dem Schieber 18 und unter Einwirkung des Überdrucks der Verbrennungsprodukte im Raum 11 der Kammer 2 bewegt sich der Schieber 18 in seine untere Endstellung.

Die Verbrennungsprodukte 40 verdrängen die Flüssigkeit 8 über dem Dichtungselement 19 durch die Öffnung 20 und die Öffnungen 23 und gelangen durch eine Schicht der Flüssigkeit 8 in den Raum 7. Dabei werden sie von Staub und kleinen schwebenden Teilchen gereinigt und geben sie ihre Wärme und Energie ab. Weiter entweichen sie durch das Rohr 34 aus dem Raum 7 und aus der Anlage in Pfeilrichtung D. Die in der Stirnwand 31 des Gehäuses 28 des Deckels 13 ausgeführten Öffnungen 32 dienen dem Durchgang der Verbrennungsprodukte 40 und dem Auffangen größerer Teilchen der verbrannten Grate 15 und somit dem Schutz des Dichtungselements 19 vor Beschädigungen.

Dann nimmt der Deckel 13 mit Hilfe des Hydraulikzylinders 26 seine in Fig. 1 gezeigte obere Ausgangsstellung ein.

Die erfindungsgemäße Anlage ermöglicht eine Erweiterung der Nomenklatur der zu behandelnden Werkstücke, da die überschüssige Wärme der Verbrennungsprodukte nicht auf die zu behandelnden Werkstücke übertragen, sondern aus der Arbeitskammer durch das Auslaßventil abgeführt wird, was besonders wichtig ist für Werkstücke aus Aluminiumlegierungen und einige andere. Außerdem haben die Werkstücke nach der Behandlung einen geringeren Belag aus Metalloxiden und Teilchen der verbrannten Grate.

Industrielle Anwendbarkeit

Die Erfindung kann in Maschinenbaubetrieben zum Putzen von Werkstücken aus Metall und Plast verwendet werden.

## Patentansprüche

1. Thermoimpulsanlage zum Entgraten von Werkstücken (14), die einen Rahmen mit einer Arbeitskammer (2) enthält, die mit Zündkerzen (9), einem Einlaßventil (10) zum Füllen des Raums (11) der Kammer (2) mit einem Brennstoffgemisch, einem Auslaßventil (12) zum Austritt der Verbrennungsprodukte aus dem Raum (11) der Kammer (2) und einem Deckel (13) zur Aufnahme der zu behandelnden Werkstücke (14) versehen ist, der eine hin- und hergehende Bewegung im Innern der Kammer (2) ausführen kann, dadurch **gekennzeichnet** daß der Rahmen in Form eines hohlen Gehäuses (1) ausgebildet ist, die Arbeitskammer (2) im Innern dieses Gehäuses (1) mit Bildung eines Raums (7) zwischen den Innenwänden (4) des Gehäuses (1) und den Außenwänden (6) der Kammer (2) für eine teilweise diesen Raum (7) füllende Flüssigkeit (8) untergebracht ist, das Auslaßventil (12) im unteren Teil der Arbeitskammer (2) an deren Längsachse (16) entlang unter einer Schicht der FLüssigkeit (8) montiert ist und in seinen Wänden (22) Öffnungen (23) ausgeführt sind, die den Raum (7) für die Flüssigkeit (8) mit dem Raum (11) der Arbeitskammer (2) verbinden, und im Deckel (13) zur Aufnahme der zu behandelnden Werkstücke (14) auf seiten des Auslaßventils (12) Öffnungen (32) für den Durchgang der Verbrennungsprodukte aus dem Raum (11) der Arbeitskammer (2) durch die Eintrittsöffnung (20) des Auslaßventils (12) und seine in den Seitenwänden (22) gebildeten Öffnungen (23) in den Raum (7) für die Flüssigkeit (8) ausgeführt sind.

## Revendications

1. Installation à impulsions thermiques pour l'ébavurage de pièces (14), qui contient un bâti avec un chambre de travail (2) qui est pourvue de bougies d'allumage (9), d'une vanne d'admission (10) pour le remplissage de l'espace (11) de la chambre (2) avec un mélange combustible, d'une vanne de sortie (12) pour la sortie des produits de combustion hors de l'espace (11) de la chambre (2) et d'un couvercle (13) pour la réception des pièces à traiter (14), qui peut exécuter un mouvement de va-et-vient à l'intérieur de la chambre (2), caractérisée en ce que le bâti est réalisé sous le forme d'une enceinte creuse (1), la chambre de travail (2) est logée à l'intérieur de cette enceinte (1) avec formation d'un espace (7) entre les parois internes (4) de l'enceinte (1) et les parois externes (6) de la chambre (2) pour un liquide (8) remplissant partiellement cet espace (7), la vanne de sortie (12) est montée dans la partie inférieure de la chambre de travail (2) le long de l'axe longitudinal (16) de celle-ci sous une couche du liquide (8) et dans ses parois (22) sont réalisés des orifices (23) qui relient l'espace (7) pour le liquide (8) à l'espace (11) de la chambre de travail (2) et dans le couvercle (13) pour la réception des pièces à traiter (14) sont réalisés, du côté de la vanne de sortie (12), des orifices (32) pour la passage des produits de combustion provenant de l'espace (11) de la chambre de travail (2) à travers l'orifice d'entrée (20) de la vanne de sortie (12) et ses orifices (23) formés dans les parois latérales (22) pour parvenir dans l'espace (7) pour le liquide (8).

## Claims

1. A thermopulse installation for removing burrs from workpieces (14), which comprises a frame with a working chamber (2) which is provided with spark plugs (9), an inlet valve (10) for filling the space (11) of the chamber (2) with a fuel mixture, an outlet valve (12) for discharging the combustion products from the space (11) of the chamber (2) and a cover (13) for receiving the workpieces (14) to be treated, which cover can execute a to and fro movement in the interior of the chamber (2), characterised in that the frame is designed in the form of a hollow housing (1), the working chamber (2) is accommodated in the interior of this housing (1) with the formation of a space (7) between the inner walls (4) of the housing (1) and the outer walls (6) of the chamber (2) for a liquid (8) which partially fills this space (7), the outlet valve (12) is mounted in the lower part of the working chamber (2) along the longitudinal axis (16) of the latter below a layer of the liquid (8) and openings (23) are constructed in its walls (22), which openings connect the space (7) for the liquid (8) to the space (11) of the working chamber (2), and, in the cover (13) for receiving the workpieces (14) to be treated on the side of the outlet valve (12), openings (32) are constructed for the passage of the combustion products from the space (11) of the working chamber (2) through the inlet opening (20) of the outlet valve (12) and its openings (23) — formed in the lateral walls (22) — into the space (7) for the liquid (8).

FIG.1

FIG.4

FIG.3

FIG.2